# EUROPEAN PATENT SPECIFICATION

(11) **EP 2 923 971 B1**
(45) Date of publication and mention of the grant of the patent: **28.06.2017**
(21) Application number: 15161069.8
(22) Date of filing: 26.03.2015
(51) Int. Cl.: B65G 1/04, B65G 1/137

(54) **A system for collecting products as well as a method for using the same**
System zum Sammeln von Gegenständen sowie Verfahren zum Betreiben desselben
Système de collection de produits et son procédé d'utilisation

(30) Priority: 28.03.2014 NL 2012528
(43) Date of publication of application: 30.09.2015
(73) Proprietor: Vanderlande Industries B.V., 5466 RB Veghel (NL)
(72) Inventor: Van Den Berk, Franciscus Maria, 5691 ZG SON EN BREUGEL (NL); Van Wijngaarden, Bruno, 5691 RE SON EN BREUGEL (NL); Boonstra, Jan Jeroen, 6605 RT WIJCHEN (NL)
(74) Representative: Algemeen Octrooi- en Merkenbureau B.V.

(56) References cited:
- FR-A1- 2 710 330

## Description

The present invention relates to a system according to the preamble of claim 1.

Such a system is described in FR 2710330 A1. This concerns an automated storage magazine having a row of lifts which row extends perpendicular to racks of the magazine.

German publication DE 10 2009 032 406 A1 describes a system comprising parallel racks in which product containers are stored. So-called shuttles can move forward and backward in aisles between adjacent racks on every level of the racks for collecting product bins from a storage position of a rack or, on the contrary, placing them into a storage position of a rack. Lifts are provided at the ends of aisles between adjacent racks, which lifts are designed to pick up a shuttle, including a product bin present thereon, and move it vertically up and down. On a specific vertical level, a product bin is transferred from a shuttle on the lift to a conveyor that connects to an endless conveyor. Two collecting stations are disposed beside the path of the endless supply conveyor, to which collecting stations the product bins can be supplied and where collecting bins can be filled with products from product bins. Once a product bin in the collecting station is no longer needed for filling collecting bins, the product bin is transferred to another endless conveyor to be supplied, via a further conveyor, to a shuttle on a lift on a different vertical level and be transferred to said shuttle. The lift subsequently moves the shuttle with the product bin to a desired vertical level, whereupon the shuttle drives off the carrying element of the lift between adjacent racks to deliver the product to a storage position in a rack.

As the handling capacity of the collecting stations or the number of collecting stations increases, it becomes more and more problematic, using a system as described above, to ensure a sufficient supply of product bins from the racks to the collecting stations. This is caused both by the limited capacity of the lifts and by the limited capacity of the endless conveyors. The object of the present invention is to provide a collecting station as described in the introduction by means of which the conveying capacity of product bins between storage positions and the at least one collecting station on the one hand and the handling capacity of the at least one collecting station on the other hand can be more adequately aligned with each other. In order to achieve that object, the collecting system according to the invention is characterised in that the at least one row extends parallel to the racks. The use of the transverse guides makes it possible to supply product bins from all storage positions along which longitudinal guides extend, which longitudinal guides are interconnected via the transverse guides, to a desired row of lifts. By making use of at least one row of lifts, the joint capacity of the lifts can be aligned with the capacity of the collecting station or the collecting stations to which product containers are supplied via a lift of the respective row of lifts by aligning the number of lifts in the row with the desired capacity. In contrast to the prior art described above, it is not necessary, therefore, that all products intended for a collecting
station be transported to the collecting station in question via the same endless conveyor.

The capacity of the further conveying system will be relatively high if only one collecting station is provided for each row of lifts. The joint capacity of the lifts of the respective row of lifts can thus be fully utilised for supplying and discharging product bins to and from said one collecting station.

The transfer guides preferably comprise longitudinal transfer guides on a number of levels, which longitudinal transfer guides each extend parallel to and along an associated row of lifts. The transport of carriages between a longitudinal guide or a transverse guide of the guide system on the one hand and a lift from the row of lifts on the other hand can thus efficiently take place via a longitudinal transfer guide.

Furthermore preferably, the transfer guides comprise transverse transfer guides on a number of levels, which transverse transfer guides each connect to a longitudinal transfer guide at one end and to the carrying element of a lift at an opposite end when the carrying element is positioned on the same level as the transverse transfer guide in question. The transverse transfer guides can in that case function as buffer positions, so that the longitudinal transfer guide to which the transverse transfer guide connects will not be blocked by a carriage.

To increase the capacity at which carriages can be supplied to or discharged from the lifts of a row of lifts, the transfer guides advantageously comprise two longitudinal transfer guides provided on opposite sides of an associated row of lifts, which longitudinal transfer guides each extend parallel to and along the row of lifts. One longitudinal transfer guide can thus be used for supplying carriages to lifts whilst the other longitudinal transfer guide can be used for discharging carriages from the lifts.

According to another preferred embodiment, the transfer guides comprise two transverse transfer guides on opposite sides of an associated lift, one of which transverse transfer guides connects to one longitudinal transfer guide at one end and to one side of the carrying element of the lift at an opposite end, whilst the other transverse transfer guide connects to the other longitudinal transfer guide lift at one end and to the opposite side of the carrying element of the lift at an opposite end when the carrying element is positioned on the same level as the transverse transfer guides.

Alternatively, or in combination with the above-discussed preferred embodiment, it may be advantageous if the transfer guides comprise a further transverse transfer guide which connects to the two longitudinal transfer guides at opposite ends and which extends past an associated lift. At the position where the further transverse transfer guide passes the associated lift, the transfer of a carriage between the further transverse transfer guide and the carrying element of the associated lift can take place.

Another preferred embodiment of the present invention is characterised in that the conveying system comprises a longitudinal conveyor which extends parallel to and along an associated row of lifts. The transport of product bins between a random lifts of the row of lifts on the one hand and a collecting station on the other and can thus take place via the longitudinal conveyor.

It may furthermore be advantageous in that case if the conveying system comprises a transverse conveyor which connects to the longitudinal conveyor at one end and to a carriage on the carrying element of a lifts at an opposite end when the carrying element is positioned on the same level as the transverse conveyor. The transverse conveyor can in that case function as a buffer position for a product container or a number of product containers.

With a view to increasing the conveying capacity it is advantageous if the conveying system comprises two longitudinal conveyors provided on opposite sides of an associated row of lifts, which longitudinal conveyors each extend parallel to and along the row of lifts, wherein furthermore preferably the conveying system comprises two transverse conveyors on opposite sides of an associated lift, one transverse conveyor of which connects to one longitudinal conveyor at one end and to one side of a carriage on the carrying element of the lift at an opposite end, whilst the other transverse conveyor connects to the other longitudinal conveyor at one end and to the other side of the carriage on the carrying element of the lift at an opposite end when the carrying element is positioned on the same level as the transverse conveyors.

For reasons of constructional simplicity it may be advantageous if the longitudinal transfer guide and the longitudinal conveyor are provided directly above each other and/or if the transverse transfer guide and transverse conveyor are provided directly above each other.

Greater constructional simplicity is also obtained in the situation in which a longitudinal conveyor is provided on only one level.

In general it is furthermore preferable if the number of rows of lifts is smaller than half the number of racks.

It may also be very advantageous if the single collecting station is provided for every row of lifts and/or if the system comprises a number of collecting stations as well as a number of rows of lifts and if the supply conveying system is designed to convey product containers only between the lifts of a particular row of lifts and some of the number of collecting stations and to convey product containers between the lifts of the other row(s) of lifts and the other collecting stations of said number of collecting stations. The capacity of the conveying system, or at least the relevant part thereof, can thus be fully utilised for supplying product bins to or discharging product bins from the respective portion of the number of collecting station or of the one collecting station.

The present invention also provides a method for collecting products from product containers in collecting containers in accordance with orders to that effect, which method is characterised in that a system according to the invention as described in the foregoing is used in a preferred embodiment thereof or otherwise.

The invention will now be explained in more detail by means of a description of a preferred embodiment of the present invention, not to be construed as limiting the invention, in which reference is made to the following figures:
Figure 1 is a perspective top plan view of (a part of) a collecting system according to the invention;
Figure 2 is a more detailed view of a part of figure 1;
Figure 3 is a view of the conveying system and (a part of) the further conveying system that forms part of the collecting system of figure 1;
Figure 4a is a top plan view of figure 1;
Figure 4b is a side view of figure 1;
Figures 5a-5c show three successive stages during the transfer of a product container from a carriage on a carrying element of a lift to a transverse conveyor;
Figure 6 is a schematic, perspective top plan view of a carriage at the location of an intersection of guides.

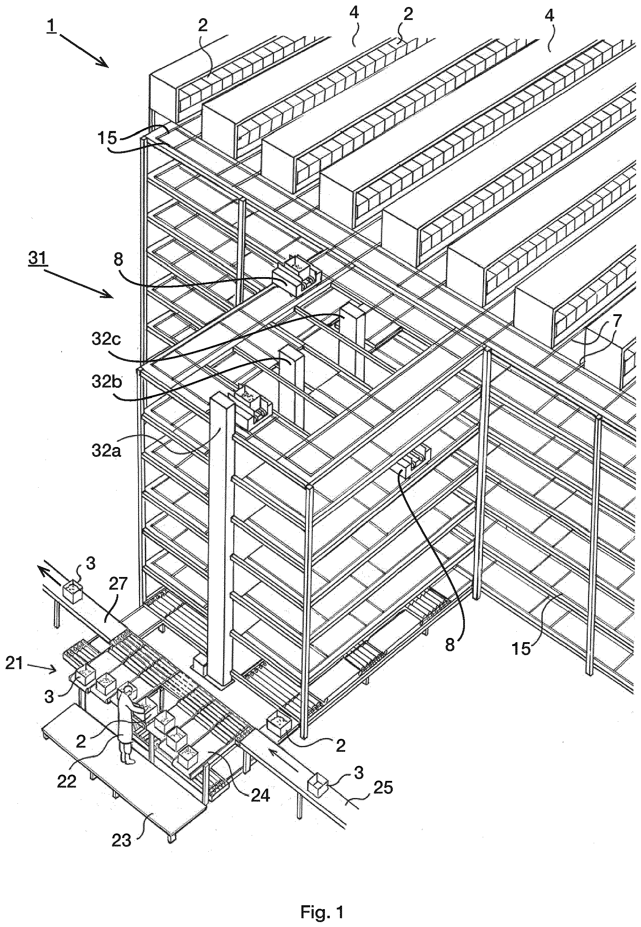

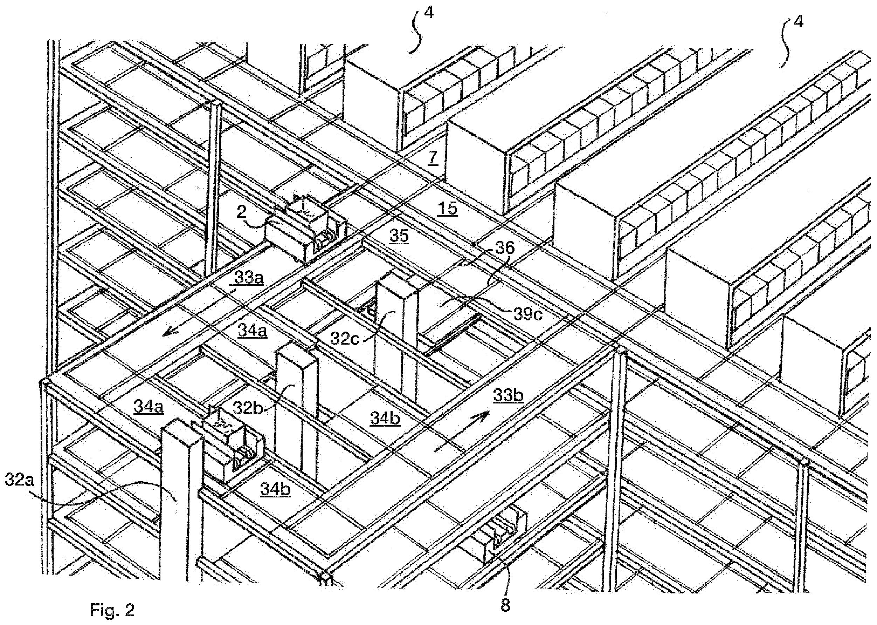

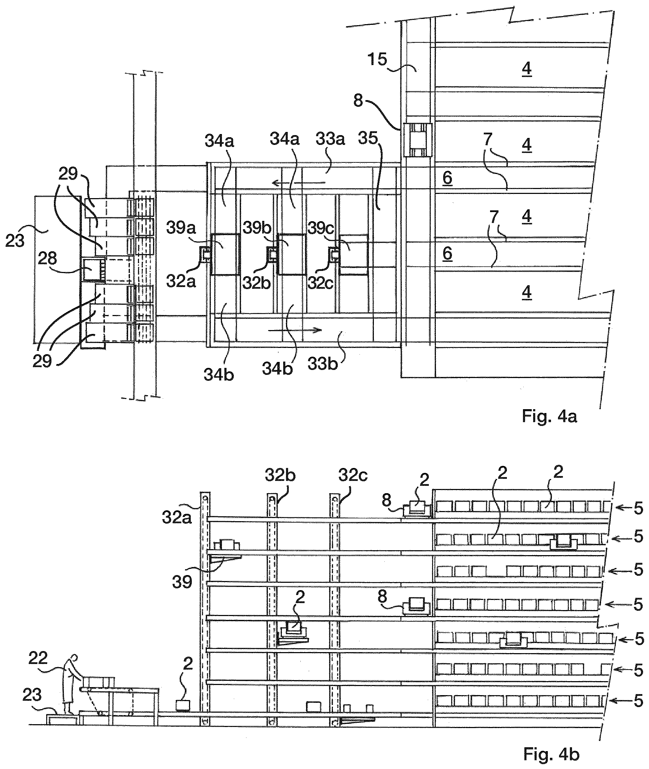

Figures 1-4b relate to a collecting system 1 according to the invention. More specifically, the collecting system 1 is designed for collecting products from product containers 2 into collecting containers 3 in accordance with orders to that effect. The orders are input into a control system by means of which the collecting system 1 is controlled. The product containers 2 and the collecting containers 3 as used in the collecting system 1 are bins, but they may also be configured otherwise. The collecting containers 3 may also be configured as trays or as cardboard boxes, for example. Each collecting container 2 contains one product or a number of identical products.

The collecting system 1 comprises a number of racks 4 for the storage of the product containers 2. The racks extend parallel to each other and comprise side-by-side storage positions for the product containers 2 on facing sides. The storage positions are provided on seven superimposed levels 5. In fact the storage positions may be formed by support edges, for example, on which bottom edges of the bin-shaped product containers 2 can be supported. Aisles 6 extend between adjacent racks 4. In said aisles 6, longitudinal guides 7 extending parallel to the adjacent racks 4 are provided on every level 5. The longitudinal guides 7 extend along the entire length of the racks 4. The longitudinal guides 7 may be configured as rails, for example.

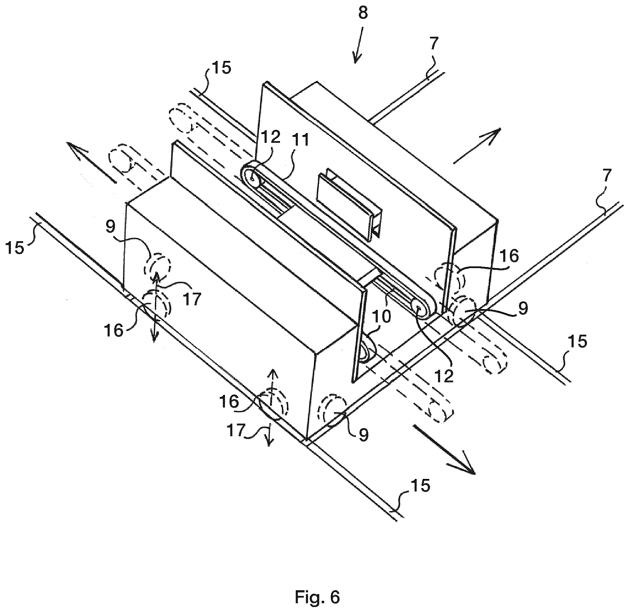

The collecting system 1 further comprises a number of carriages 8 (see also figure 6), also referred to as "shuttles", which can move along the storage positions of the two adjacent racks 4 on the relevant level 5 via the longitudinal guides 7. Such carriages 8 are known per se, for example from you US publication US 5,370,492. The carriage 8 comprises four running wheels 9, which may be retained, for example in vertical direction, within the longitudinal guides 7, wherein two opposite running wheels 9, or for example all four running wheels 9, can be driven by means of an electrical, wirelessly controllable driving system (not shown) with which the carriage 9 is equipped. The carriage 8 further comprises two arms 10 which can be extended in two opposite directions to a storage position. The arms 10 are provided with an endless load-bearing belt 11, which is passed over two pulleys 12, at least one of which can be rotatably driven by the electrical driving system of the carriage 8. By moving toward a storage position, the carriage 8 can either transfer a product container 2 supported on the upper part of the belts 11 to a storage position or pick up a product container 2 from a storage position. It may be useful in that regard if the arms 10 can also make a small vertical reciprocating stroke with respect to the storage position in question or if every storage position, or preferably every carriage 8, is provided with an operable stop member against which the product container 2 can strike when the arms 10 are being retracted. For a detailed description of a possible embodiment of the carriage 8 reference is made to Dutch publication NL 2008454.

The collecting system 1 further comprises transverse guides 15 at one of the two short ends of each rack 4 on every level 5. The transverse guides 15 connect to ends of the longitudinal guides 7 and extend perpendicular thereto. The carriages 8 are also designed to travel along the transverse guides 15. Every carrier 8 is for that purpose also provided with four transverse running wheels 16 which can move up and down relative to the running wheels 9 as indicated by the double arrow 17. In a lower position, the carriage 8 is supported on a transverse guide 15, and the running wheels 9 are detached from their surroundings, whilst in an upper position of the transverse running wheels 16 the carriage 8 is supported on longitudinal guides 7 with its running wheels 9. Alternatively it is also conceivable to make use of running wheels which can pivot through 90° instead of using running wheels 9 and transverse running wheels 16. Two opposite transverse running wheels 16 or all four transverse running wheels 16 can be rotatably driven by the electrical driving system of the carriage 8. The presence of the various transverse guides 15 makes it possible for each carriage 8 to move from one aisle 6, via a transverse guide 15, to another aisle 6 on a particular level 5.

The collecting station 1 further comprises a collecting station 21. For a detailed description of the collecting station 21 reference is made to publication EP 2 050 695 A1. It suffices here to describe that at the collecting station 21 product containers 2 are presented one by one to an operator 22 standing on a platform 23 at a pick position 28. Responding to orders to that effect, the operator removes one or a number of products from the product container 2 being presented and subsequently places said product(s) into one or a number of the six collecting containers 3 present at positions to the left and to the right of the operator 22 at the ends of short conveyor belts 24. Said positions of the collecting containers 3 are place positions 29. Via a supply conveyor 25, collecting containers 3 are supplied to one of the six place positions 29 of the collecting station 21. Once the filling of a collecting container 3 at the collecting station 21 is complete, the collecting container 3 is discharged again from the place position 29 in question, so that said place position 29 becomes available for a next collecting container 3, and the collecting container 3 in question is discharged via the discharge conveyor 27.

For the transportation of product bins 2 between the racks 4 on the one hand and the collecting station 21 on the other hand, the collecting system 1 is provided with a lift system 31 in addition to the guides 7, 15 along which carriages 8 can move on a particular level 5. The lift system 31 comprises a row of three lifts 32, individually indicated by numerals 32a, 32b and 32c, with respective platforms 39, individually indicated by numerals 39a, 39b and 39c. The row of lifts 32 extends parallel to the racks 4. In the immediate vicinity of the lifts 32, the guide system, of which the longitudinal guides 7 and the transverse guides 15 also form part, is extended. On all levels 5, with the exception of the lowermost level 5, this extension concerns, inter alia, longitudinal transfer guides 33a, 33b provided on two opposite sides of the lifts 32, which guides each extend parallel to and along the row of lifts 32. Each of the longitudinal transfer guides 33a, 33b connects to a transverse guide 15 with one end, as a result of which carriage 8 can move between the transverse guides 15 on the one hand and the longitudinal transfer guides 33a, 33b on the other hand. The longitudinal transfer guide 33a is intended for supplying carriages 8 to one of the lifts 32 via said longitudinal transfer guide 33a, whilst the longitudinal transfer guide 33b is designed to carry carriages 8 received from one of the lifts 32 away from the lifts 32 again in the direction of a storage position.

On opposite sides of the lifts 32a, 32b the guide system further comprises transverse transfer guides 34a, 34b, which each connect to one of the longitudinal transfer guides 33a, 33b with one end and to the platform 39a, 39b of the lift 32a, 32b in question with the respective opposite end when the platform 39a, 39b is present on the level 5 in question. This connection makes it possible to transfer a carriage 8 to a platform 39a, 39b of one of the lifts 32a, 32b via the longitudinal transfer guide 33a and one of the transverse transfer guides 34a, or to carry off a carriage 8 again from a platform 39a, 39b of one of the lifts 32a, 32b to a transverse guide 15 via a transverse transfer guide 34b and a longitudinal transfer guide 33b. Platforms 39a, 39b of the lifts 32a, 32b are for that purpose provided with guide portions which extend parallel to the transverse transfer guides 34a, 34b.

The guide system is provided with a further transverse transfer guide 35 for the lift 32c, which transverse transfer guide 35 extends parallel to the transverse transfer guides 34a, 34b between the longitudinal transfer guides 33a, 33b and along the lift 32c. Halfway the length of the further transverse transfer guides 35, longitudinal guide portions 36 are provided, via which a carriage 8 can be moved onto and off a platform 39c of the lift 32c. The platform 39c is for that purpose provided with guide portions that extend parallel to and in line with the longitudinal guide portions 36.

On the lowermost level 5, the guide system around the lift system 31 is configured significantly less extensive than on the higher levels 5. On said lowermost level 5, the guide system is merely configured for supplying and discharging carriages 8 to and from the lift 32c. The guide system is for that purpose only provided with a further transverse transfer guide 35 on the lowermost level 5. On the lowermost level 5, a conveying system is furthermore provided, which conveying system is designed for conveying individual product containers 2 between a carriage 8 on a platform 39 of one of the lifts 32 on the one hand and the collecting station 21 on the other hand. The conveying system comprises two longitudinal conveyors 41 a, 41 b on two opposite sides of the row of lifts 32. The longitudinal conveyors 41 a, 41 b each comprise different types of conveyors, in this case roller conveyors and belt conveyors arranged in line with each other. The conveying system further comprises transverse conveyors 42a, 42b on either side of each lift 32, which transverse conveyors connect one of the longitudinal conveyors 41 a to a carriage 8 on a carrying element 39 of a lift 32. The supply of product containers 2 from a lift 32 to the collecting station 21 takes place via one of the transverse conveyors 42a and the longitudinal conveyor 41 a, respectively. The discharge of a product container 2 from the collecting station 21 to lift takes place via a longitudinal conveyor 41 b and one of the transverse conveyors 42b, respectively.

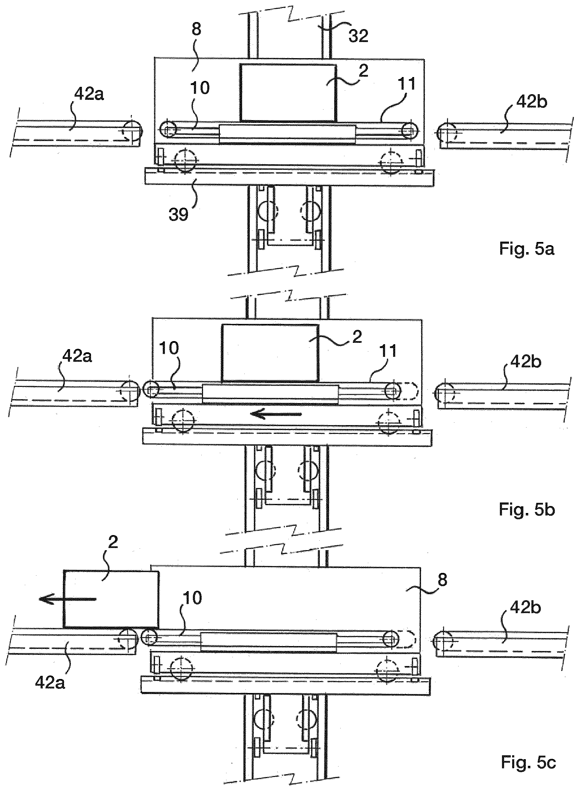

The successive drawings of figures 5a-5c schematically show how a product container 2 supported on the two load-bearing belts 11 of a carriage 8 supported on a carrying element of a lift 32a, 32b is transferred to a transverse conveyor 42a. Figure 5a shows the situation in which the lift 32a, 32b in question has arrived at the level 5 in question. The upper part of the load-bearing belts 11 and the support surface associated with the transverse conveyor 42a (and also of the support surface of the transverse conveyor 42b for that matter) are in line with each other. Figure 5b shows how the arms 10 are slightly extended in the direction of the transverse conveyor 42a until they closely abut the transverse conveyor 42a. Then the load-bearing belts 11 are driven and the product container is transferred to the transverse conveyor 42a. The skilled person will appreciate that a comparable, albeit reverse, process takes place for transferring a product container from a transverse conveyor 42b to the carriage 8.

When the collecting system 1 is in use, the control system thereof receives orders to collect various products. The control system determines in which storage positions product containers 2 containing the products in question are stored and subsequently delivers control signals to one or a number of carriages 8 to collect the product containers 2 in question. The carriages 8 for that purpose move to the level 5 of the product container 2 in question with one of the lifts 32, if necessary, (which will usually not be the case in practice because usually one or a number of carriages 5 will be present on each level 5 and/or because, as will be explained in more detail yet, the control system already takes into account which product container 2 is to be picked up next by the carriage 8 in question upon returning a product container 2 to a storage position, in the sense that the distance between the storage positions in question is determined to be short and that in any case care is taken that the storage positions in question are located on the same level 5) and subsequently, via the guides 7 and 15, to the storage positions in question to pick up the respective product containers 2 there. The carriages 8 carrying the product containers 2 subsequently move to a lift 32 via the guides 7, 15 and 33a, 34a. The control system also arranges for the platform 39 of the lifts to be moved to the relevant level 5. In the meantime, the transverse transfer guide 34a or the further transverse transfer guide 35 can function as a buffer location, if desired. Once the platform 39 has arrived at the level 5 in question, the carriage 8 will move onto the platform 39 and the lift 32 will move to the lowermost level 5 with the platform 39. Having arrived there, the conveying system as described above, more specifically a transverse conveyor 42a thereof, will take over the product container 2 from the carriage 8, which thus becomes available either for picking up a product container again from a transverse conveyor 42b or for collecting a next product container 2 from a storage position. The product container 2 is supplied to the collecting station 21 via a transverse conveyor 42a and the longitudinal conveyor 41 a. In the collecting station 21, the product container 2 is passed under the discharge conveyor 27 to be supplied to the pick position 28. Once the required products have been removed from the product container 2 in question by the operator 22 and placed into one or a number of the collecting containers 3, the collecting station 21 will discharge the product container 2 from the pick position again, after which the product container in 2 will be taken over again by the longitudinal conveyor 41 b. Subsequently the product container 2 is transferred to a carriage 8 on the platform 39 of one of the lifts 32 via one of the transverse conveyors 42b. The lift 32 in question subsequently moves to a desired level 5 under the control of the control system, on which level the carriage 8 carries the product container 2 to a storage position again via one of the transverse transfer guides 34b, 35, the longitudinal transfer guide 33b and the guides 15, 17.

The discharge of empty product containers 2 as well as the supply of filled product containers 2 to the collecting system can be realised in various ways. Thus it is possible, for example, to connect a discharge conveyor for (empty) product containers 2 that extends parallel to the supply conveyor 25 to the longitudinal conveyor 41 b without making use of capacity of lifts 32 and carriages 8 for this purpose, for example. The longitudinal conveyor 41 b is also highly suitable for connection thereto of a supply conveyor for product containers 2 (filled with products). Said supply conveyor can also extend parallel to the supply conveyor 25. After a filled product container 2 has been supplied to the longitudinal conveyor 41 b via the above-proposed supply conveyor, said product container 2 can be conveyed to a desired storage location on a carriage 8, by means of a lift 32, in the above-describe manner.

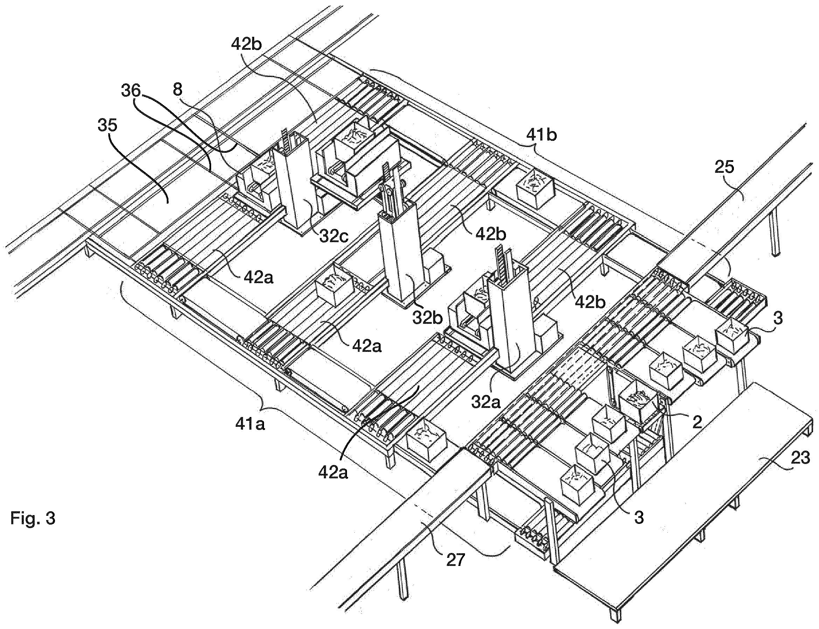

The collecting system 1 as described in the foregoing with reference to the figures must not be construed as limiting the invention, as all kinds of alternative embodiments are conceivable within the scope of the present invention. Thus it might for example be decided not to make use of the transverse transfer guides 34a, 34b and to have the longitudinal transfer guides 33a, 33b extend directly along the lifts 32, so that the transfer of product conveyors 2 between a platform 39 and a longitudinal transfer guide 33a, 33b can take place directly. It is also possible not to use transverse conveyors 42a, 42b and to have the longitudinal conveyors 41 a, 41 b extend directly along the lifts 32. The product containers 2 could in that case be directly transferred from a carriage 8 on a platform 39 to the longitudinal conveyors 41 a, or a product container 2 could be directly transferred from the longitudinal conveyor 41 b to a carriage 8 on the platform 39. In that sense it is also conceivable not to use the further transverse transfer guide 35 and to position the lift 32c directly beside the transverse guide 15, so that a carriage 8 can be directly transferred between the transverse guide 15 and the carrying element 39c of the lift 32. Furthermore it is also possible to provide the racks 4 also on the side of the longitudinal transfer guides 33a, 33b remote from the lifts 32, with longitudinal guides such as the longitudinal guides 7, which connect to the transverse guide 15, provided therebetween. In another variant the collecting station 21 may also be of a different type, for example a fully automated type, and/or two or more collecting stations arranged in parallel or in series may be provided for each row of lifts. According to yet another variant, transverse guides extending parallel to transverse guides between the ends of the racks 4 and/or at the opposite end of the racks 4 may be provided in addition to the transverse guides 15. A carriage 8 can thus more quickly transfer from one longitudinal guide 7 to another. In the embodiment described with reference to the figures, a collecting station 21 is provided on one level 5 only. Within the scope of the invention it is also possible to provide a collecting station 21, including the transport means as discussed with reference to figure 3, on a number of levels 5 of the total number of levels 5, for example on two or three levels 5. For the levels 5 in question only the lift 32a would be available in that embodiment for exchanging carriages 8 carrying a product container 2 with said levels 5.

## Claims

1. A system (1) for collecting products from product containers (2) into collecting containers (3) in accordance with orders to that effect, comprising a number of racks (4) arranged parallel to each other, each rack comprising, on a number of superimposed levels (5), side-by-side storage positions for product containers (2), a guide system comprising horizontal longitudinal guides (7) extending between adjacent racks, parallel to the racks, on a number of levels, carriages (8) capable of travelling along the longitudinal guides between adjacent racks on various levels, which carriages are each provided with exchange means (10) at least for transferring a product container to a storage position and taking over a product container from a storage position, lifts (32), each lift comprising a carrying element that can be moved to a position in which it connects to the guide system on various levels for taking over a carriage from the guide system and for transferring a carriage to the guide system, at least one collecting station (21), a conveying system comprising a supply conveying system (41) for supplying product containers from a lift to a collecting station and a discharge conveying system (42) for discharging product containers from the collecting station to a lift, a further conveying system comprising a further supply conveying system (25) for supplying collecting containers to the collecting station and a further discharge conveying system (27) for discharging collecting containers from the collecting station, the guide system further comprising horizontal transverse guides (15) extending above each other, transversely to the racks, which transverse guides connect to longitudinal guides and along which the carriages can also move, wherein lifts arranged in groups in at least one row are provided, and wherein the guide system comprises transfer guides (33, 34) which connect to the transverse guides and/or to the longitudinal guides, along which transfer guides the carriages can move between the lifts on the one hand and the transverse guides and/or the longitudinal guides on the other hand, **characterized in that** the at least one row of lifts (32) extends parallel to the racks.

2. A system (1) according to claim 1, **characterised in that** a single collecting station (21) is provided for every row of lifts (32).

3. A system (1) according to claim 1 or 2, **characterised in that** the transfer guides (33, 34) comprise longitudinal transfer guides (33) on a number of levels (5), which longitudinal transfer guides each extend parallel to and along an associated row of lifts (32).

4. A system (1) according to claim 3, **characterised in that** the transfer guides (33, 34) comprise transverse transfer guides (34) on a number of levels (5), which transverse transfer guides each connect to a longitudinal transfer (33) guide at one end and to the carrying element (39) of a lift (32) at an opposite end when the carrying element is positioned on the same level as the transverse transfer guide in question.

5. A system (1) according to any one of the preceding claims, **characterised in that** the transfer guides (33, 34) comprise two longitudinal transfer guides (33a, 33b) provided on opposite sides of an associated row of lifts (32), which longitudinal transfer guides each extend parallel to and along the row of lifts.

6. A system (1) according to claim 5, **characterised in that** the transfer guides (33, 34) comprise two transverse transfer (34a, 34b) guides on opposite sides of an associated lift (32), one (34a) of which transverse transfer guides connects to one longitudinal transfer guide (33a) at one end and to one side of the carrying element (39) of the lift (32) at an opposite end, whilst the other transverse transfer guide (34b) connects to the other longitudinal transfer (33b) guide at one end and to the opposite side of the carrying element of the lift at an opposite end when the carrying element is positioned on the same level as the transverse transfer guides.

7. A system (1) according to claim 5 or 6, **characterised in that** the transfer guides (33, 34) comprise a further transverse transfer guide (35) which connects to the two longitudinal transfer guides (33a, 33b) at opposite ends and which extends past an associated lift (32).

8. A system (1) according to any one of the preceding claims, **characterised in that** the conveying system comprises, preferably only at one level, a longitudinal conveyor (41) which extends parallel to and along an associated row of lifts (32).

9. A system (1) according to claim 8, **characterised in that** the conveying system comprises a transverse conveyor (42) which connects to the longitudinal conveyor (41) at one end and to a carriage on the carrying element (39) of a lift (32) at an opposite end when the carrying element is positioned on the same level as the transverse conveyor.

10. A system (1) according to any one of the preceding claims, **characterised in that** the conveying system comprises two longitudinal conveyors (41 a, 41 b) provided on opposite sides of an associated row of lifts (32), which longitudinal conveyors each extend parallel to and along the row of lifts.

11. A system (1) according to claim 10, **characterised in that** the conveying system comprises two transverse conveyors (42a, 42b) on opposite sides of an associated lift (32), one transverse conveyor (42a) which connects to one longitudinal conveyor (41a) at one end and to one side of a carriage on the carrying element (39) of the lift at an opposite end, whilst the other transverse conveyor (42b) connects to the other longitudinal conveyor (41b) at one end and to the other side of the carriage on the carrying element of the lift at an opposite end when the carrying element is positioned on the same level as the transverse conveyors.

12. A system (1) according to claim 3 and according to claim 8, **characterised in that** the longitudinal transfer guide (33) and the longitudinal conveyor (41) are provided directly above each other.

13. A system (1) according to claim 4 and according to claim 9, **characterised in that** the transverse transfer guide (34) and transverse conveyor (42) are provided directly above each other.

14. A system (1) according to any one of the preceding claims, **characterised in that** the system comprises a number of collecting stations (21) as well as a number of rows of lifts (32) and that the supply conveying system (41) is designed to convey product containers (2) only between the lifts (32) of a particular row of lifts and some of the number of collecting stations and to convey product containers between the lifts of the other row(s) of lifts and the other collecting stations of said number of collecting stations.

15. A method for collecting products from product containers (2) into collecting containers (3) in accordance with orders to that effect, **characterised in that** a system (1) according to any one of the preceding claims is used.

## Patentansprüche

1. System (1) zum Sammeln von Produkten aus Produktbehältern (2) in Sammelbehälter (3) gemäß dahingehenden Anweisungen, mit mehreren zueinander parallel angeordneten Regalen (4), wobei jedes Regal auf mehreren übereinanderliegenden Ebenen (5) nebeneinanderliegende Lagerplätze für Produktbehälter (2) umfasst, einem Führungssystem mit waagrechten Längsführungen (7), die zwischen benachbarten Regalen parallel zu den Regalen auf mehreren Ebenen verlaufen, Wagen (8), die längs der Längsführungen zwischen benachbarten Regalen auf verschiedenen Ebenen verfahrbar sind, wobei an den Wagen jeweils zumindest zur Übergabe eines Produktbehälters an einen Lagerplatz und zur Übernahme eines Produktbehälters aus einem Lagerplatz Austauscheinrichtungen (10) vorgesehen sind, Aufzügen (32), die jeweils ein Tragelement umfassen, das in eine Stellung bewegbar ist, in der es auf verschiedenen Ebenen mit dem Führungssystem zur Übernahme eines Wagens vom Führungssystem und zur Übergabe eines Wagens an das Führungssystem in Verbindung steht, wenigstens einer Sammelstation (21), einem Fördersystem mit einem Zufuhrfördersystem (41) zum Zuführen von Produktbehältern aus einem Aufzug zu einer Sammelstation und einem Abfuhrfördersystem (42) zum Abführen von Produktbehältern aus der Sammelstation zu einem Aufzug, einem weiteren Fördersystem mit einem weiteren Zufuhrfördersystem (25) zum Zuführen von Sammelbehältern zur Sammelstation und einem weiteren Abfuhrfördersystem (27) zum Abführen von Sammelbehältern aus der Sammelstation, wobei das Führungssystem ferner waagrechte Querführungen (15) umfasst, die übereinander quer zu den Regalen verlaufen, wobei die Querführungen mit Längsführungen in Verbindung stehen und die Wagen auch längs der Querführungen bewegbar sind, wobei gruppenweise in wenigstens einer Reihe angeordnete Aufzüge vorgesehen sind, und wobei das Führungssystem Übergabeführungen (33, 34) umfasst, die mit den Querführungen und/oder den Längsführungen in Verbindung stehen, wobei die Wagen längs der Übergabeführungen zwischen den Aufzügen einerseits und den Querführungen und/oder den Längsführungen andererseits bewegbar sind, **dadurch gekennzeichnet, dass** die wenigstens eine Reihe von Aufzügen (32) parallel zu den Regalen verläuft.

2. System (1) nach Anspruch 1, **dadurch gekennzeichnet, dass** für jede Reihe von Aufzügen (32) eine einzelne Sammelstation (21) vorgesehen ist.

3. System (1) nach Anspruch 1 oder 2, **dadurch gekennzeichnet, dass** die Übergabeführungen (33, 34) auf mehreren Ebenen (5) Übergabelängsführungen (33) umfassen, die jeweils parallel zu und längs einer dazugehörigen Reihe von Aufzügen (32) verlaufen.

4. System (1) nach Anspruch 3, **dadurch gekennzeichnet, dass** die Übergabeführungen (33, 34) auf mehreren Ebenen (5) Übergabequerführungen (34) umfassen, die jeweils an einem Ende mit einer Übergabelängsführung (33) und an einem entgegengesetzten Ende mit dem Tragelement (39) eines Aufzugs (32) in Verbindung stehen, wenn sich das Tragelement auf derselben Ebene befindet wie die betreffende Übergabequerführung.

5. System (1) nach einem der vorhergehenden Ansprüche, **dadurch gekennzeichnet, dass** die Übergabeführungen (33, 34) zwei Übergabelängsführungen (33a, 33b) umfassen, die auf gegenüberliegenden Seiten einer dazugehörigen Reihe von Aufzügen (32) vorgesehen sind und die jeweils parallel zu und längs der Reihe von Aufzügen verlaufen.

6. System (1) nach Anspruch 5, **dadurch gekennzeichnet, dass** die Übergabeführungen (33, 34) auf gegenüberliegenden Seiten eines dazugehörigen Aufzugs (32) zwei Übergabequerführungen (34a, 34b) umfassen, wobei eine (34a) der Übergabequerführungen an einem Ende mit einer Übergabelängsführung (33a) und an einem entgegengesetzten Ende mit einer Seite des Tragelements (39) des Aufzugs (32) in Verbindung steht, während die andere Übergabequerführung (34b) an einem Ende mit der anderen Übergabelängsführung (33b) und an einem entgegengesetzten Ende mit der entgegengesetzten Seite des Tragelements des Aufzugs in Verbindung steht, wenn sich das Tragelement auf derselben Ebene befindet wie die Übergabequerführungen.

7. System (1) nach Anspruch 5 oder 6, **dadurch gekennzeichnet, dass** die Übergabeführungen (33, 34) eine weitere Übergabequerführung (35) umfassen, die an entgegengesetzten Enden mit den beiden Übergabelängsführungen (33a, 33b) in Verbindung steht und die an einem dazugehörigen Aufzug (32) vorbei verläuft.

8. System (1) nach einem der vorhergehenden Ansprüche, **dadurch gekennzeichnet, dass** das Fördersystem vorzugsweise nur auf einer Ebene einen Längsförderer (41) umfasst, der parallel zu und längs einer dazugehörigen Reihe von Aufzügen (32) verläuft.

9. System (1) nach Anspruch 8, **dadurch gekennzeichnet, dass** das Fördersystem einen Querförderer (42) umfasst, der an einem Ende mit dem Längsförderer (41) und an einem entgegengesetzten Ende mit einem Wagen auf dem Tragelement (39) eines Aufzugs (32) in Verbindung steht, wenn sich das Tragelement auf derselben Ebene befindet wie der Querförderer.

10. System (1) nach einem der vorhergehenden Ansprüche, **dadurch gekennzeichnet, dass** das Fördersystem zwei Längsförderer (41 a, 41 b) umfasst, die auf gegenüberliegenden Seiten einer dazugehörigen Reihe von Aufzügen (32) vorgesehen sind und die jeweils parallel zu und längs der Reihe von Aufzügen verlaufen.

11. System (1) nach Anspruch 10, **dadurch gekennzeichnet, dass** das Fördersystem zwei Querförderer (42a, 42b) auf gegenüberliegenden Seiten eines dazugehörigen Aufzugs (32) umfasst, wobei ein Querförderer (42a) an einem Ende mit einem Längsförderer (41a) und an einem entgegengesetzten Ende mit einer Seite eines Wagens auf dem Tragelement (39) des Aufzugs in Verbindung steht, während der andere Querförderer (42b) an einem Ende mit dem anderen Längsförderer (41b) und an einem entgegengesetzten Ende mit der anderen Seite des Wagens auf dem Tragelement des Aufzugs in Verbindung steht, wenn das Tragelement sich auf derselben Ebene befindet wie die Querförderer.

12. System (1) nach Anspruch 3 und nach Anspruch 8, **dadurch gekennzeichnet, dass** die Übergabelängsführung (33) und der Längsförderer (41) direkt übereinander vorgesehen sind.

13. System (1) nach Anspruch 4 und nach Anspruch 9, **dadurch gekennzeichnet, dass** die Übergabequerführung (34) und der Querförderer (42) direkt übereinander vorgesehen sind.

14. System (1) nach einem der vorhergehenden Ansprüche, **dadurch gekennzeichnet, dass** das System mehrere Sammelstationen (21) sowie mehrere Reihen von Aufzügen (32) umfasst und dass das Zufuhrfördersystem (41) zum Befördern von Produktbehältern (2) lediglich zwischen den Aufzügen (32) einer bestimmten Reihe von Aufzügen und einigen der mehreren Sammelstationen und zum Befördern von Produktbehältern zwischen den Aufzügen der anderen Reihe(n) von Aufzügen und den anderen Sammelstationen der mehreren Sammelstationen gestaltet ist.

15. Verfahren zum Sammeln von Produkten aus Produktbehältern (2) in Sammelbehälter (3) gemäß dahingehenden Anweisungen, **dadurch gekennzeichnet, dass** ein System (1) nach einem der vorhergehenden Ansprüche verwendet wird.

## Revendications

1. Système (1) pour la collecte de produits à partir de récipients de produit (2) vers des récipients de collecte (3) conformément à des ordres à cet effet, comprenant un nombre d'étagères (4) agencées parallèlement les unes aux autres, chaque étagère comprenant, sur un nombre de niveaux superposés (5), des positions de stockage côte à côte pour des récipients de produit (2), un système de guidage comprenant des guides longitudinaux horizontaux (7) s'étendant entre des étagères adjacentes, parallèlement aux étagères, à un certain nombre de niveaux, des chariots (8) capables à se déplacer le long des guides longitudinaux entre des étagères adjacentes à différents niveaux, lesquels chariots étant pourvus chacun de moyens d'échange (10) au moins pour transférer un récipient de produit vers une position de stockage et pour reprendre un récipient de produit à partir d'une position de stockage, des élévateurs (32), chaque élévateur comprenant un élément porteur qui peut être déplacé vers une position dans laquelle il est relié au système de guidage à différents niveaux pour reprendre un chariot à partir du système de guidage et pour transférer un chariot au système de guidage, au moins une station de collecte (21), un système de transport comprenant un système de transport et d'alimentation (41) pour alimenter des récipients de produit à partir d'un élévateur vers une station de collecte et un système de transport et de décharge (42) pour décharger des récipients de produit à partir de la station de collecte vers un élévateur, un système de transport supplémentaire comprenant un système de transport et d'alimentation supplémentaire (25) pour alimenter des récipients collecteurs vers la station de collecte et un système de transport et de décharge supplémentaire (27) pour décharger des récipients de collecte à partir de la station de collecte, le système de guidage comprenant en outre des guides transversaux horizontaux (15) s'étendant les uns au-dessus des autres, transversalement aux étagères, lesquels guides transversaux sont reliés à des guides longitudinaux et le long desquels les chariots peuvent également se déplacer, où des élévateur agencés en groupes dans au moins une rangée sont prévus, et où le système de guidage comprend des guides de transfert (33, 34) qui sont reliés aux guides transversaux et/ou aux guides longitudinaux, le long desquels guides de transfert les chariots peuvent se déplacer entre les élévateurs d'une part et les guides transversaux et/ou les guides longitudinaux d'autre part, **caractérisé en ce que** ladite au moins une rangée d'élévateurs (32) s'étend parallèlement aux étagères.

2. Système (1) selon la revendication 1, **caractérisé en ce qu'**une seule station de collecte (21) est prévue pour chaque rangée d'élévateurs (32).

3. Système (1) selon la revendication 1 ou 2, **caractérisé en ce que** les guides de transfert (33, 34) comprennent des guides de transfert longitudinaux (33) sur un nombre de niveaux (5), lesquels guides de transfert longitudinaux s'étendent chacun parallèlement à une rangée associée d'élévateurs (32) et le long de celle-ci.

4. Système (1) selon la revendication 3, **caractérisé en ce que** les guides de transfert (33, 34) comprennent des guides de transfert transversaux (34) à un nombre de niveaux (5), lesquels guides de transfert transversaux sont reliés chacun à un guide de transfert longitudinal (33) au niveau d'une extrémité et à l'élément porteur (39) d'un élévateur (32) au niveau d'une extrémité opposée lorsque l'élément porteur est positionné au même niveau que le guide de transfert transversal en question.

5. Système (1) selon l'une quelconque des revendications précédentes, **caractérisé en ce que** les guides de transfert (33, 34) comprennent deux guides de transfert longitudinaux (33a, 33b) prévus sur des côtés opposés d'une rangée associée d'élévateurs (32), lesquels guides de transfert longitudinaux s'étendent chacun parallèlement à la rangée d'élévateurs et le long de celle-ci.

6. Système (1) selon la revendication 5, **caractérisé en ce que** les guides de transfert (33, 34) comprennent deux guides de transfert transversaux (34a, 34b) sur des côtés opposés d'un élévateur associé (32), dont un guide (34a) des guides de transfert transversaux est relié à un guide de transfert longitudinal (33a) au niveau d'une extrémité et à un côté de l'élément porteur (39) de l'élévateur (32) au niveau d'une extrémité opposée, tandis que l'autre guide de transfert transversal (34b) est relié à l'autre guide de transfert longitudinal (33b) au niveau d'une extrémité et au côté opposé de l'élément porteur de l'élévateur au niveau d'une extrémité opposée lorsque l'élément porteur est positionné au même niveau que les guides de transfert transversaux.

7. Système (1) selon la revendication 5 ou 6, **caractérisé en ce que** les guides de transfert (33, 34) comprennent un guide de transfert transversal supplémentaire (35) qui est relié aux deux guides de transfert longitudinaux (33a, 33b) au niveau des extrémités opposées et qui s'étend au-delà d'un élévateur associé (32).

8. Système (1) selon l'une quelconque des revendications précédentes, **caractérisé en ce que** le système de transport comprend, de préférence uniquement à un niveau, un convoyeur longitudinal (41) qui s'étend parallèlement à une rangée associée d'élévateurs (32) et le long de celle-ci.

9. Système (1) selon la revendication 8, **caractérisé en ce que** le système de transport comprend un convoyeur transversal (42) qui est relié au convoyeur longitudinal (41) au niveau d'une extrémité et à un chariot sur l'élément porteur (39) d'un élévateur (32) au niveau d'une extrémité opposée lorsque l'élément porteur est positionné au même niveau que le convoyeur transversal.

10. Système (1) selon l'une quelconque des revendications précédentes, **caractérisé en ce que** le système de transport comprend deux convoyeurs longitudinaux (41 a, 41 b) prévus sur des côtés opposés d'une rangée associée d'élévateurs (32), lesquels convoyeurs longitudinaux s'étendent chacun parallèlement à la rangée d'élévateurs et le long de celle-ci.

11. Système (1) selon la revendication 10, **caractérisé en ce que** le système de transport comprend deux convoyeurs transversaux (42a, 42b) sur des côtés opposés d'un élévateur associé (32), un convoyeur transversal (42a) qui est relié à un convoyeur longitudinal (41 a) au niveau d'une extrémité et à un côté d'un chariot sur l'élément porteur (39) de l'élévateur au niveau d'une extrémité opposée, tandis que l'autre convoyeur transversal (42b) est relié à l'autre convoyeur longitudinal (41 b) au niveau d'une extrémité et à l'autre côté du chariot sur l'élément porteur de l'élévateur au niveau d'une extrémité opposée lorsque l'élément porteur est positionné au même niveau que les convoyeurs transversaux.

12. Système (12) selon les revendications 3 et 8, **caractérisé en ce que** le guide de transfert longitudinal (33) et le transporteur longitudinal (41) sont prévus directement l'un au-dessus de l'autre.

13. Système (1) selon les revendications 4 et 9, **caractérisé en ce que** le guide de transfert transversal (34) et le convoyeur transversal (42) sont prévus directement l'un au-dessus de l'autre.

14. Système (1) selon l'une quelconque des revendications précédentes, **caractérisé en ce que** le système comprend un certain nombre de stations de collecte (21) ainsi qu'un certain nombre de rangées d'élévateurs (32) et que le système de transport et d'alimentation (41) est conçu pour transporter des récipients de produit (2) uniquement entre les élévateurs (32) d'une rangée particulière d'élévateurs et une partie du nombre de stations de collecte et pour transporter des récipients de produit entre les élévateurs de l'autre/des autres rangée(s) d'élévateurs et les autres stations de collecte dudit nombre de stations de collecte.

15. Procédé de collecte de produits à partir de récipients de produit (2) vers des récipients de collecte (3) conformément à des ordres à cet effet, **caractérisé en ce qu'**un système (1) selon l'une quelconque des revendications précédentes est utilisé.
